# EUROPÄISCHE PATENTSCHRIFT

(11) **EP 3 315 526 B1**
(45) Veröffentlichungstag und Bekanntmachung des Hinweises auf die Patenterteilung: **26.09.2018**
(21) Anmeldenummer: 17194666.8
(22) Anmeldetag: 04.10.2017
(51) Int. Cl.: C08G 18/48, C08G 18/72, C08G 18/75, C08G 18/78, C08G 18/24

(54) **EROSIONSBESTÄNDIGE POLYURETHANBESCHICHTUNG**
EROSION-RESISTANT POLYURETHANE COATING
REVÊTEMENT EN POLYURÉTHANE RÉSISTANT À L'ÉROSION

(30) Priorität: 26.10.2016 DE 102016120385
(43) Veröffentlichungstag der Anmeldung: 02.05.2018
(73) Patentinhaber: Fraunhofer-Gesellschaft zur Förderung der angewandten Forschung e.V., 80686 München (DE)
(72) Erfinder: BAUMANN, Stefan, 89312 Günzburg (DE); STENZEL, Volkmar, 27321 Thedinghausen (DE); PAZELT, Gesa, 28359 Bremen (DE); SCHREINER, Claus, 28217 Bremen (DE); BRINKMANN, Andreas, 27726 Worpswede (DE)
(74) Vertreter: Maiwald Patent- und Rechtsanwaltsgesellschaft mbH

(56) Entgegenhaltungen:
- US-A- 5 258 482

## Beschreibung

Die vorliegende Erfindung betrifft Zusammensetzungen, mit denen sich Oberflächen, die einer erhöhten Erosion bzw. einem erhöhten abrasiven Verschleiß ausgesetzt sind, beschichten lassen.

Erosion findet statt, wenn Festkörperpartikel oder Flüssigkeitstropfen mit hoher Geschwindigkeit auf der Oberfläche eines Bauteils auftreffen und dabei die Oberfläche beschädigen. Läuft dieser Prozess des abrasiven Verschleisses über einen ausreichend langen Zeitraum ab, kann dies schließlich zum Versagen des Bauteils führen. Typischer Vertreter einer durch Festkörperpartikel verursachten Erosion ist die Sanderosion und typischer Vertreter einer durch Flüssigkeitstropfen erzeugten Erosion ist die Regenerosion. Beide Erosionsarten verursachen jedes Jahr hohe Schäden an unterschiedlichsten Bauteilen.

Insbesondere Bauteile, die sich mit großer Geschwindigkeit bewegen (z.B. die Vorderkante eines Flugzeugflügels, Rotorblätter, Propellerflügel oder Turbinenschaufeln), erleiden erhebliche Schäden durch Erosion.

Da im Fall der Vorderkante von Flugzeugflügeln bisherige Beschichtungen keinen ausreichenden Erosionsschutz boten, wurde dieser Bereich üblicherweise nicht beschichtet. Mit der zunehmenden Verwendung von Kohlenstofffaser-verstärktem Kunststoff (CFK) als Werkstoff ist diese Vorgehensweise jedoch nicht mehr möglich. Da dieser Werkstoff selbst nicht erosionsbeständig ist, muss er durch geeignete Maßnahmen (z.B. eine Beschichtung) vor abrasivem Verschleiß geschützt werden.

In kritischen Bereichen, die einem hohen abrasiven Verschleiß ausgesetzt sind, können erosionsbeständigere Werkstoffe wie z.B. Titan eingesetzt werden. Dies führt jedoch zu einer Gewichtserhöhung.

In einem weiteren Ansatz zum Erosionsschutz stark beanspruchter Bauteile werden Folien oder Tapes auf die dem abrasiven Verschleiß ausgesetzten Bereiche aufgebracht. Solche Tapes sind auch kommerziell erhältlich, beispielsweise die Polyurethane Protective Tapes 8671, 8672 und 8681 der Firma 3M®.

WO2008/157013 A1 beschreibt ein Verfahren zum Schutz einer aerodynamischen Vorderkantenprofilfläche vor Sand- und Wassererosion, das folgende Schritte umfasst: (a) Aufbringen einer Grundbeschichtung in Form einer vorgeformten Formabdeckung mit einer zu der Vorderkantenfläche komplementären Ausformung auf der Vorderkantenfläche; (b)Verbinden der vorgeformten Formabdeckung mit der Vorderkantenfläche und (c)Aufbringen einer sanderosionsfesten Deckbeschichtung durch Aufbürsten oder Aufsprühen einer Mehrzahl von Schichten auf die Grundbeschichtung.

WO 2013/092211 A1 beschreibt eine mehrschichtige Struktur, die als Erosionsschutz auf ein Windturbinenrad aufgebracht ist.

Neuere Entwicklungen zielen darauf ab, Folien oder Tapes durch Beschichtungen zu ersetzen.

Um als wirksamer Erosionsschutz zu fungieren, müssen die Beschichtungen geeignete mechanische Eigenschaften aufweisen, beispielsweise eine gute Balance zwischen hoher Zugfestigkeit und hoher maximaler Dehnung. Weiterhin sollte die Viskosität der Ausgangszusammensetzung nicht zu hoch sein, so dass ein problemloses Auftragen auf dem Bauteil möglich ist.

US 2015/0166831 A1 beschreibt eine härtbare Zusammensetzung für die Herstellung einer als Erosionsschutz fungierenden Polyurethanbeschichtung. Diese härtbare Zusammensetzung enthält (i) ein Isocyanat-Prepolymer der allgemeinen Formel OCN-Z-NCO, wobei die Verknüpfungseinheit Z mindestens zwei Urethaneinheiten enthält, (ii) ein Diol mit einem Molekulargewicht von weniger als 250 g/mol und (iii) ein Polyetherdiol mit einem Molekulargewicht von mindestens 250 g/mol.

Härtbare Zusammensetzungen für die Herstellung einer als Erosionsschutz fungierenden Polyurethanbeschichtung sind auch kommerziell erhältlich, beispielsweise Relest® Wind LEP S von BASF oder 3M® Wind Blade Protection Coating von 3M.

Eine Aufgabe der vorliegenden Erfindung ist die Bereitstellung einer härtbaren Zusammensetzung, die sich gut auf dem zu schützenden Bauteil applizieren lässt und aus der sich eine Beschichtung für den Erosionsschutz mit geeigneten mechanischen Eigenschaften, insbesondere einer guten Balance zwischen hoher Zugfestigkeit und hoher maximaler Dehnung, herstellen lässt.

Gelöst wird die Aufgabe durch eine härtbare Zusammensetzung, umfassend
(i) ein aliphatisches Diisocyanat der folgenden Formel (I)

   OCN-(CH₂)ₓ-G-(CH₂)_{y}-NCO (I)

   wobei x und y unabhängig voneinander einen Wert von 4-10 aufweisen und G eine Allophanat-Gruppe ist,
   oder ein Präpolymer des aliphatischen Diisocyanats der Formel (I),
(ii) ein cycloaliphatisches Diisocyanat oder ein Präpolymer davon,
(iii) ein Polyetherpolyol mit einem zahlengemittelten Molekulargewicht Mn von nicht mehr als 1500 g/mol.

Im Rahmen der vorliegenden Erfindung wurde erkannt, dass sich eine Zusammensetzung, die die Komponenten (i), (ii) und (iii) umfasst, sehr gut auf den zu schützenden Bauteilen applizieren lässt (z.B. über eine Spritzapplikation, die hydraulisch ("airless") oder auch pneumatisch erfolgen kann) und nach ihrer Aushärtung eine Polyurethan-Beschichtung bereitstellt, die eine sehr gute Balance zwischen hoher Zugfestigkeit und hoher maximaler Dehnung aufweist und als Erosionsschutz für das Bauteil fungieren kann. Wie die Beispiele der vorliegenden Erfindung belegen, ist die Anwesenheit beider Diisocyanate (d.h. eines aliphatischen Diisocyanats mit einer Allophanat-Gruppe und eines cycloaliphatischen Diisocyanats) erforderlich, um die vorteilhaften mechanischen Eigenschaften der Beschichtung zu realisieren.

Wie oben bereits ausgeführt, ist die Komponente (i) der härtbaren Zusammensetzung ein aliphatisches Diisocyanat der folgenden Formel (I)

OCN-(CH₂)ₓ-G-(CH₂)_{y}-NCO (I)

wobei x und y unabhängig voneinander einen Wert von 4-10, bevorzugter 4-8 aufweisen und G eine Allophanat-Gruppe ist.

Wie dem Fachmann bekannt ist, weist eine Allophanat-Gruppe folgende chemische Struktur auf: -N(COOR)-C(O)-N(H)-, wobei R ein organischer Rest ist.

In einer bevorzugten Ausführungsform ist x=y=6. Das Diisocyanat weist dann folgende chemische Struktur auf:

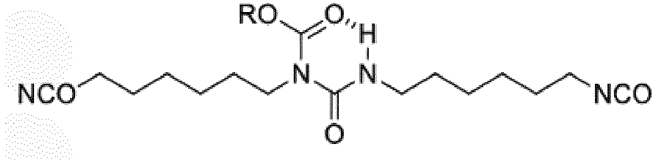

Bevorzugt ist der Rest R in der Allophanat-Gruppe eine C₁₋₂₀-Alkyl-Gruppe (bevorzugter eine C₁₀₋₂₀-Alkyl-Gruppe oder alternativ auch eine C₁₋₁₀-Alkylgruppe), die substituiert oder unsubstituiert sein kann und optional alkoxyliert ist.

Die alkoxylierte Alkyl-Gruppe weist bevorzugt die folgende Struktur auf:

-(CH₂-CH₂-O)ₐ-R²

wobei R² eine substituierte oder unsubstituierte C₁₋₂₀-Alkyl-Gruppe, bevorzugter eine substituierte oder unsubstituierte C₁₀₋₂₀-Alkyl-Gruppe ist und a=1-10, bevorzugter 1-5 oder 2-4 ist.

Aliphatische Diisocyanate, die eine Allophanat-Gruppe enthalten, sind kommerziell erhältlich oder können über Syntheseverfahren, die dem Fachmann bekannt sind, hergestellt werden.

Ein kommerziell erhältliches aliphatisches Diisocyanat mit einer Allophanat-Gruppe ist beispielsweise Tolonate® X FLO 100 von Vencorex. In diesem Diisocyanat mit Allophanat-Gruppe ist x=y=6, d.h. zwischen der terminalen Isocyanat-Gruppe und der Allophanat-Gruppe liegt jeweils eine Hexamethylengruppe -(CH₂)₆- vor.

Die Herstellung von aliphatischen Diisocyanaten, die eine Allophanat-Gruppe aufweisen, wird beispielsweise in US 8,716,426 B2 beschrieben.

Optional können die Isocyanatgruppen in blockierter Form vorliegen und erst bei ausreichender Erwärmung unter Abspaltung des Blockierungsmittels in die reaktiven Isocyanatgruppen überführt werden. Geeignete Blockierungsmittel sind dem Fachmann bekannt.

Optional kann das aliphatische Diisocyanat mit Allophanat-Gruppe auch in Form eines Präpolymers vorliegen. Die Verwendung eines Diisocyanat-Präpolymers anstelle des monomeren Diisocyanats ist eine dem Fachmann bekannte Vorgehensweise.

Als Komponente (ii) umfasst die erfindungsgemäße Zusammensetzung ein cycloaliphatisches Diisocyanat.

Das cycloaliphatische Diisocyanat enthält bevorzugt keine Allophanat-Gruppe.

Bevorzugt ist das cycloaliphatische Diisocyanat Isophorondiisocyanat, 4,4'-Diisocyanatodicyclohexylmethan (H12MDI), 1,4-Cyclohexylendiisocyanat oder 1,3-Cyclohexylendiisocyanat oder ein Gemisch aus mindestens zwei dieser cycloaliphatischen Diisocyanate.

In einer bevorzugten Ausführungsform ist das cycloaliphatische Diisocyanat Isophorondiisocyanat. Optional kann das Isophorondiisocyanat zusammen mit mindestens einem weiteren cycloaliphatische Diisocyanat eingesetzt werden. Bevorzugt wird jedoch nur das Isophorondiisocyanat als cycloaliphatisches Diisocyanat eingesetzt.

Das Masse-Verhältnis von aliphatischem Diisocyanat mit Allophanat-Gruppe (Komponente (i)) zu cycloaliphatischem Diisocyanat (Komponente (ii)) kann über einen breiten Bereich variiert werden und beträgt beispielsweise 99,5/0,5 - 0,5/99,5, bevorzugter 99,5/0,5 - 30/70.

Optional können die Isocyanatgruppen in blockierter Form vorliegen und erst bei ausreichender Erwärmung unter Abspaltung des Blockierungsmittels in die reaktiven Isocyanatgruppen überführt werden. Geeignete Blockierungsmittel sind dem Fachmann bekannt.

Optional kann das cycloaliphatische Diisocyanat auch in Form eines Präpolymers vorliegen. Die Verwendung eines Diisocyanat-Präpolymers anstelle des monomeren Diisocyanats ist eine dem Fachmann bekannte Vorgehensweise.

Als Komponente (iii) umfasst die erfindungsgemäße Zusammensetzung ein Polyetherpolyol mit einem zahlengemittelten Molekulargewicht Mn von nicht mehr als 1500 g/mol.

Bevorzugt ist das Polyetherpolyol ein Polyetherdiol, insbesondere ein lineares Polyetherdiol. Die im linearen Polyetherdiol vorliegende Monomereinheit leitet sich bevorzugt von Propylenglycol, 1,4-Butandiol (bzw. Tetrahydrofuran), 1,5-Pentandiol oder 1,6-Hexandiol ab. In einer bevorzugten Ausführungsform ist das lineare Polyetherdiol ein Polypropylenglycol oder ein Polytetrahydrofuran, wobei es sich um ein Homopolymer oder alternativ auch um ein Copolymer handeln kann.

Das zahlengemittelte Molekulargewicht Mn liegt bevorzugt im Bereich von 140 g/mol bis 1500 g/mol, bevorzugter 140 g/mol bis 500 g/mol.

Im Rahmen der vorliegenden Erfindung ist es möglich, ein Gemisch aus mindestens zwei Polyetherpolyolen (z.B. ein Gemisch aus zwei Polytetrahydrofuranen) mit unterschiedlichen Mn-Werten, beispielsweise ein erstes Polyetherpolyol mit relativ hohem Mn-Wert und ein zweites Polyetherpolyol mit deutlich niedrigerem Mn-Wert, zu verwenden. In einer bevorzugten Ausführungsform umfasst die Zusammensetzung jedoch kein Polyetherpolyol mit einem Mn-Wert von mehr als 500 g/mol. Bevorzugt enthält die Zusammensetzung nur ein Polyetherpolyol (z.B. ein Polytetrahydrofuran) und dieses weist einen Mn-Wert im Bereich von 140 g/mol bis 500 g/mol auf.

Die Bestimmung des zahlengemittelten Molekulargewichts kann beispielsweise durch nasschemische OH-Zahlbestimmung nach DIN 53 240 oder entsprechend der in der US 2010/0240864 A1 beschriebenen Methode erfolgen.

Polyetherpolyole, die die oben beschriebenen Eigenschaften aufweisen, sind kommerziell erhältlich oder können über Syntheseverfahren, die dem Fachmann allgemein bekannt sind, hergestellt werden.

Das Verhältnis des Polyetherpolyols (Komponente (iii)) zu den beiden Diisocyanaten (Komponente (i) + Komponente (ii)) kann über einen breiten Bereich variiert werden. In einer bevorzugten Ausführungsform ist das molare Verhältnis der Isocyanatgruppen der Komponenten (i) und (ii) (d.h. Summe der Isocyanatgruppen der Komponenten (i) und (ii)) zu den Hydroxylgruppen der Komponente (iii) >1,0 und liegt beispielsweise im Bereich von 1,01 bis 1,20.

Um die Aushärtung zu unterstützen, kann die Zusammensetzung optional noch einen Katalysator umfassen. Geeignete Katalysatoren für die Polyurethanherstellung sind dem Fachmann allgemein bekannt. Als Katalysator können beispielsweise Metallhaltige Katalysatoren, insbesondere Zinn-haltige (z.B. Dibutylzinndilaurat), Vanadium- oder Titan-haltige Katalysatoren, oder tertiäre Amine eingesetzt werden.

Die Komponenten (i), (ii) und (iii) können beispielsweise getrennt gelagert werden und eine Mischung aller Komponenten erfolgt erst für die Herstellung der Beschichtung. Alternativ kann beispielsweise die Komponente (i) zusammen mit der Komponente (ii), aber getrennt von der Komponente (iii) gelagert werden, wobei optional der Katalysator in den Komponenten (i)+(ii) oder in der Komponente (iii) vorliegt.

Gegebenenfalls kann die Aushärtung der Zusammensetzung noch durch ein Erwärmen (z.B. auf eine Temperatur von 50-80°C) unterstützt werden.

Optional kann die Zusammensetzung Pigmente und/oder Füllstoffe enthalten. Die Zusammensetzung kann mit den gängigen anorganischen oder organischen Pigmenten und Füllstoffen pigmentiert werden. Zur Steigerung der Erosionsbeständigkeit eignen sich beispielsweise Füllstoffe auf Basis von Cristobalit SiO₂ und Wollastonit Ca₃Si₃O₉ / CaO•SiO₂.

Weiterhin kann die Zusammensetzung verschiedene Additive wie Entschäumer, Entlüfter, Verlaufsadditive, Benetzungsadditive oder Lichtschutzmittel enthalten, um an bestimmte Eigenschaften angepasst zu werden.

Die Zusammensetzung kann auf das zu beschichtende Bauteil über allgemein bekannte Applikationsmethoden wie z.B. eine Spritzapplikation bzw. Spritzlackierung, durch Rollen oder Streichen aufgebracht werden. Die Spritzapplikation der erfindungsgemäßen Zusammensetzung sowohl hydraulisch ("airless") als auch pneumatisch erfolgen.

Zur Viskositätseinstellung kann die Zusammensetzung optional ein Lösungsmittel enthalten, beispielsweise auf der Basis von Estern, Ethern und/oder Ketonen. Die erfindungsgemäße Zusammensetzung kann aber auch Lösungsmittel-frei verwendet werden, da sie ohne Lösungsmittel bereits eine relativ niedrige Viskosität aufweist.

In einer beispielhaften Ausführungsform umfasst die härtbare Zusammensetzung folgende Komponenten:
(i) ein aliphatisches Diisocyanat der folgenden Formel (I)

   OCN-(CH₂)ₓ-G-(CH₂)_{y}-NCO (I)

   wobei x und y unabhängig voneinander einen Wert von 4-10, bevorzugter 4-8, noch bevorzugter 6 aufweisen und die Allophanat-Gruppe G folgende chemische Struktur aufweist:

   -N(COOR)-C(O)-N(H)-

   wobei R ein organischer Rest ist,
(ii) Isophorondiisocyanat,
(iii) Polytetrahydrofuran mit einem Mn im Bereich von 140-1500 g/mol, bevorzugter 140-500 g/mol.

Der organische Rest R der Allophanat-Gruppe ist bevorzugt eine alkoxylierte Alkyl-Gruppe, die folgende Struktur aufweist:

-(CH₂-CH₂-O)ₐ-R²

wobei
R² eine substituierte oder unsubstituierte C₁₋₂₀-Alkyl-Gruppe, bevorzugter eine substituierte oder unsubstituierte C₁₀₋₂₀-Alkyl-Gruppe ist und a=1-10, bevorzugter 1-5 oder 2-4 ist.

Beispielsweise wird das unter der Bezeichnung "Tolonate® X Flo 100" von Vencorex kommerziell erhältliche Diisocyanat, das eine Allophanat-Gruppe enthält und in dem x=y=6 ist, verwendet.

Wenn die Komponenten (i), (ii) und (iii) miteinander in Kontakt gebracht werden, optional in Anwesenheit eines geeigneten Härtungskatalysators und/oder unter Erwärmung, erfolgt die Reaktion des Polyetherpolyols mit den beiden DiisocyanatKomponenten (i) und (ii) und damit die Ausbildung einer Polyurethanbeschichtung.

Die vorliegende Erfindung betrifft daher außerdem eine Polyurethan-Beschichtung, die durch Aushärtung (d.h. Reaktion der Komponenten (i), (ii) und (iii)) der oben beschriebenen Zusammensetzung) erhältlich ist.

Weiterhin betrifft die vorliegende Erfindung ein Verfahren zur Herstellung einer Polyurethanbeschichtung, wobei die oben beschriebene Zusammensetzung auf ein Bauteil aufgebracht und ausgehärtet wird (d.h. die Komponenten (i), (ii) und (iii) auf dem Bauteil miteinander zur Reaktion gebracht werden).

Das Aufbringen der Zusammensetzung kann beispielsweise erfolgen, indem die Komponenten (i), (ii) und (iii) bereits vor dem Aufbringen auf das zu beschichtende Bauteil miteinander gemischt werden und die Mischung der drei Komponenten anschließend aufgetragen wird.

Wie oben bereits erwähnt, kann das Aushärten der Zusammensetzung auf dem Bauteil optional in Anwesenheit eines Katalysators und/oder unter Erwärmung erfolgen.

Weiterhin betrifft die vorliegende Erfindung ein Bauteil, das die oben beschriebene Beschichtung aufweist.

Bei dem Bauteil handelt es sich beispielsweise um einen Flugzeugflügel (insbesondere die Vorderkante eines Flugzeugflügels), ein Rotorblatt, einen Propellerflügel oder eine Turbinenschaufel. Die Beschichtung kann aber beispielsweise auch für Gebäudebauteile eingesetzt werden.

Weiterhin betrifft die vorliegende Erfindung die Verwendung der oben beschriebenen Zusammensetzung bzw. der daraus erhältlichen Polyurethanbeschichtung zum Erosionsschutz von Bauteilen.

Die vorliegende Erfindung wird anhand der nachfolgenden Beispiele eingehender beschrieben.

### Beispiele

### Erfindungsgemäßes Beispiel 1 (EB1)

Für die härtbare Zusammensetzung in Beispiel 1 wurden folgende Komponenten verwendet:

| | |
|---|---|
| Aliphatisches Diisocyanat mit Allophanat-Gruppe, x=y=6, (Tolonate® X Flo 100) | 11,81 Massen-% |
| Isophorondiisocyanat als cycloaliphatisches Diisocyanat | 41,14 Massen-% |
| Polytetrahydrofuran, Mn=250 g/mol (PTHF 250) | 42,61 Massen-% |
| Härtungskatalysator: Dibutylzinnlaurat, 1%-ig in PTHF 250 | 4,44 Massen-% |
| | 100 Massen-% |

Um die mechanischen Eigenschaften der Polyurethanbeschichtung zu bestimmen, wurde folgendermaßen vorgegangen:
Die Zusammensetzung wurde auf einem PTFE-Substrat aufgebracht und bei etwa 75°C über einen Zeitraum von etwa 5 Stunden ausgehärtet. Es wurde ein Polyurethanfilm mit einer Dicke von etwa 50 µm erhalten. Der Polyurethanfilm wurde vom PTFE-Substrat abgezogen und zu einem Probenkörper gefertigt. Der Probenkörper wurde in eine statische Material-Prüfvorrichtung eingesetzt und in einem Zugversuch wurden die Zugfestigkeit und die maximale Dehnung (d.h. die Dehnung bis zum Bruch des Prüfkörpers) bestimmt. Die Ergebnisse der Messung sind nachfolgend in der Tabelle 1 angegeben.

Außerdem wurde die Zusammensetzung auf Metallkörper aufgebracht und bei etwa 75°C über einen Zeitraum von etwa 5 Stunden ausgehärtet. Die Beschichtung wurde anschließend einem Regenerosionstest unterzogen. In diesem Test setzte ein Regengenerator Wassertropfen frei und unterhalb des Regengenerators in einem Abstand von 3 m waren 3 beschichtete Metallkörper auf einem rotierenden Probenhalter befestigt. Umfangsgeschwindigkeit: 143 m/s; Wasserfluss: 24 l/min; Temperatur der Wassertropfen: 20-30°C; Tropfendurchmesser: 1-2 mm (85%). Die mit der erfindungsgemäßen Beschichtung versehenen Prüfkörper wiesen in diesem Test eine hohe Erosionsbeständigkeit von mindestens 3 ½ Stunden auf.

### Erfindungsgemäßes Beispiel 2 (EB2)

Für die härtbare Zusammensetzung in Beispiel 2 wurden folgende Komponenten verwendet:

| | |
|---|---|
| Aliphatisches Diisocyanat mit Allophanat-Gruppe, x=y=6 (Tolonate® X Flo 100) | 12,17 Massen-% |
| Isophorondiisocyanat als cycloaliphatisches Diisocyanat | 42,39 Massen-% |
| Polytetrahydrofuran, Mn=250 g/mol (PTHF 250) | 39,50 Massen-% |
| Härtungskatalysator: Dibutylzinnlaurat, 1%-ig in PTHF 250 | 5,94 Massen-% |
| | 100 Massen-% |

Wie in Beispiel 1 beschrieben, wurden die Zugfestigkeit und die maximale Dehnung eines Polyurethanfilms, der durch Aushärtung der Zusammensetzung erhalten wurde, bestimmt. Die Ergebnisse der Messung sind nachfolgend in der Tabelle 1 angegeben.

### Erfindungsgemäßes Beispiel 3 (EB3)

Für die härtbare Zusammensetzung in Beispiel 3 wurden folgende Komponenten verwendet:

| | |
|---|---|
| Aliphatisches Diisocyanat mit Allophanat-Gruppe, x=y=6, (Tolonate® X Flo 100) | 10,94 Massen-% |
| Isophorondiisocyanat als cycloaliphatisches Diisocyanat | 38,11 Massen-% |
| Polytetrahydrofuran, Mn=250 g/mol (PTHF 250) | 40,15 Massen-% |
| Härtungskatalysator: Dibutylzinnlaurat, 1%-ig in PTHF 250 | 3,50 Massen-% |
| BYK 410 (Verdicker) | 1,00 Massen-% |
| Wolastonit | 5,00 Massen-% |
| BYK 310 (Verlaufsadditiv) | 0,30 Massen-% |
| Purmol 3 STH (Wasserfänger) | 1,00 Massen-% |
| | 100 Massen-% |

Wie in Beispiel 1 beschrieben, wurden die Zugfestigkeit und die maximale Dehnung eines Polyurethanfilms, der durch Aushärtung der Zusammensetzung erhalten wurde, bestimmt. Die Ergebnisse der Messung sind nachfolgend in der Tabelle 1 angegeben.

### Vergleichsbeispiel 1 (VB1)

In Vergleichsbeispiel 1 wurde eine härtbare Zusammensetzung verwendet, die ein cycloaliphatisches Diisocyanat, jedoch kein aliphatisches Diisocyanat mit Allophanat-Gruppe enthielt. Folgende Komponenten wurden eingesetzt:

| | |
|---|---|
| Aliphatisches Diisocyanat mit Allophanat-Gruppe, x=y=6, (Tolonate® X Flo 100) | ------- |
| Isophorondiisocyanat als cycloaliphatisches Diisocyanat | 42,29 Massen-% |
| Polytetrahydrofuran, Mn=250 g/mol (PTHF 250) | 46,71 Massen-% |
| Härtungskatalysator: Dibutylzinnlaurat, 1%-ig in PTHF 250 | 1 Massen-% |
| Butylacetat (Lösemittel) | 10 Massen-% |
| | 100 Massen-% |

Wie in Beispiel 1 beschrieben, wurden die Zugfestigkeit und die maximale Dehnung eines Polyurethanfilms, der durch Aushärtung der Zusammensetzung erhalten wurde, bestimmt. Die Ergebnisse der Messung sind nachfolgend in der Tabelle 1 angegeben.

### Vergleichsbeispiel 2 (VB2)

In Vergleichsbeispiel 2 wurde eine härtbare Zusammensetzung verwendet, die ein aliphatisches Diisocyanat mit Allophanat-Gruppe, jedoch kein cycloaliphatisches Diisocyanat enthielt. Folgende Komponenten wurden eingesetzt:

| | |
|---|---|
| Aliphatisches Diisocyanat mit Allophanat-Gruppe, x=y=6, (Tolonate® X Flo 100) | 69,20 Massen-% |
| Isophorondiisocyanat als cycloaliphatisches Diisocyanat | -------- |
| Polytetrahydrofuran, Mn=250 g/mol (PTHF 250) | 26,30 Massen-% |
| Härtungskatalysator: Dibutylzinnlaurat, 1%-ig in PTHF 250 | 4,50 Massen-% |
| | 100 Massen-% |

Unter den gleichen Härtungsbedingungen wie in Beispiel 1 war es nicht mögliche, freie Filme herzustellen. Das Material war zu elastisch und klebrig.

### Vergleichsbeispiel 3 (VB3)

In Vergleichsbeispiel 3 wurde eine härtbare Zusammensetzung verwendet, die anstelle eines cycloaliphatischen Diisocyanats ein aromatisches Diisocyanat (1,3-Bis(1-isocyanato-1-methylethyl)-Benzol (meta-TMXDI)) enthielt. Folgende Komponenten wurden eingesetzt:

| | |
|---|---|
| Aliphatisches Diisocyanat mit Allophanat-Gruppe, x=y=6, (Tolonate® X Flo 100) | 46,4 Massen-% |
| 1,3-Bis(1-isocyanato-1-methylethyl)-Benzol (meta-TMXDI), ein aromatisches Diisocyanat | 46,6 Massen-% |
| Polytetrahydrofuran, Mn=250 g/mol (PTHF 250) | 1 Massen-% |
| Härtungskatalysator: Dibutylzinnlaurat, 1%-ig in PTHF 250 | 6 Massen-% |
| | 100 Massen-% |

Unter den gleichen Härtungsbedingungen wie in Beispiel 1 war es nicht mögliche, freie Filme herzustellen. Das Material war zu elastisch und klebrig.

**Tabelle 1: Mechanische Eigenschaften der Polyurethanbeschichtungen**

| | EB1 | EB2 | EB3 | VB1 | VB2 | VB3 |
|---|---|---|---|---|---|---|
| Zugfestigkeit [N/mm²] | 40 | 60 | 85 | 12 | - | - |
| Maximale Dehnung [%] | 400 | 350 | 330 | 210 | - | - |

VB2/VB3: Wie oben bereits erwähnt, war in diesen Vergleichsbeispielen das Material zu elastisch und tackig. Bei diesen Versuchen war es nicht möglich, freie Filme herzustellen, noch sonstige Messungen durchzuführen.

Wie die oben beschriebenen Beispiele belegen, weisen die nach der Aushärtung der erfindungsgemäßen Zusammensetzung erhaltenen Beschichtungen eine hohe Regenerosionsbeständigkeit auf und zeigen eine sehr gute Balance zwischen hoher Zugfestigkeit und hoher maximaler Dehnung.

## Patentansprüche

1. Eine härtbare Zusammensetzung, umfassend
(i) ein aliphatisches Diisocyanat der folgenden Formel (I)
OCN-(CH₂)ₓ-G-(CH₂)_{y}-NCO (I)
wobei x und y unabhängig voneinander einen Wert von 4-10 aufweisen und G eine Allophanat-Gruppe ist,
oder ein Präpolymer des aliphatischen Diisocyanats der Formel (I),
(ii) ein cycloaliphatisches Diisocyanat oder ein Präpolymer davon,
(iii) ein Polyetherpolyol mit einem zahlengemittelten Molekulargewicht Mn von nicht mehr als 1500 g/mol.

2. Die Zusammensetzung nach Anspruch 1, wobei die Allophanat-Gruppe folgende chemische Struktur aufweist:
-N(COOR)-C(O)-N(H)-
wobei der Rest R eine C₁₋₂₀-Alkyl-Gruppe ist, die optional alkoxyliert ist.

3. Die Zusammensetzung nach Anspruch 2, wobei der Rest R eine alkoxylierte Alkyl-Gruppe ist, die folgende chemische Struktur aufweist:
-(CH₂-CH₂-O)ₐ-R²
wobei
R² eine C₁₋₂₀-Alkyl-Gruppe, bevorzugter eine C₁₀₋₂₀-Alkyl-Gruppe ist und
a=1-10, bevorzugter 1-5 ist.

4. Die Zusammensetzung nach einem der vorstehenden Ansprüche, wobei das cycloaliphatische Diisocyanat Isophorondiisocyanat, 4,4'-Diisocyanatodicyclohexylmethan, 1,4-Cyclohexylendiisocyanat oder 1,3-Cyclohexylendiisocyanat oder ein Gemisch aus mindestens zwei dieser Verbindungen ist.

5. Die Zusammensetzung nach einem der vorstehenden Ansprüche, wobei das Polyetherpolyol ein lineares Polyetherdiol ist.

6. Die Zusammensetzung nach einem der vorstehenden Ansprüche, wobei die im Polyetherpolyol vorliegenden Monomereinheiten sich von Propylenglycol, 1,4-Butandiol, 1,5-Pentandiol oder 1,6-Hexandiol oder einem Gemisch aus mindestens zwei dieser Verbindungen ableiten.

7. Die Zusammensetzung nach einem der vorstehenden Ansprüche, wobei das Polyetherpolyol ein Polytetrahydrofuran ist.

8. Die Zusammensetzung nach einem der vorstehenden Ansprüche, wobei das zahlengemittelte Molekulargewicht Mn des Polyetherpolyols im Bereich von 140 g/mol bis 1500 g/mol, bevorzugter 140 g/mol bis 500 g/mol liegt.

9. Die Zusammensetzung nach einem der vorstehenden Ansprüche, wobei die Zusammensetzung kein Polyetherpolyol mit einem Mn-Wert von mehr als 500 g/mol umfasst.

10. Die Zusammensetzung nach einem der vorstehenden Ansprüche, wobei das molare Verhältnis der Isocyanatgruppen der Komponenten (i) und (ii) zu den Hydroxylgruppen der Komponente (iii) >1,0 ist.

11. Eine Polyurethan-Beschichtung, erhältlich durch Aushärtung der Zusammensetzung nach einem der Ansprüche 1-10.

12. Ein Verfahren zur Herstellung einer Polyurethan-Beschichtung, wobei die Zusammensetzung nach einem der Ansprüche 1-10 auf ein Bauteil aufgebracht und ausgehärtet wird.

13. Ein Bauteil, die Polyurethan-Beschichtung nach Anspruch 11 aufweisend.

14. Das Bauteil nach Anspruch 13, wobei das Bauteil ein Flugzeugflügel, ein Rotorblatt, ein Propellerflügel oder eine Turbinenschaufel ist.

15. Verwendung der Zusammensetzung nach einem der Ansprüche 1-10 oder der Polyurethan-Beschichtung nach Anspruch 11 zum Erosionsschutz von Bauteilen.

## Claims

1. Curable composition comprising
(i) an aliphatic diisocyanate of the following formula (I)
OCN-(CH₂)ₓ-G-(CH₂)_{y}-NCO (I)
wherein x and y each independently have a value of 4-10 and G is an allophanate group,
or a pre-polymer of the aliphatic diisocyanate of the formula (I),
(ii) a cycloaliphatic diisocyanate or a pre-polymer thereof,
(iii)a polyether polyol having a number-average molecular weight Mn of not more than 1500 g/mol.

2. Composition according to Claim 1, wherein the allophanate group has the following chemical structure:
-N(COOR)-C(O)-N(H)-
wherein the radical R is a C₁₋₂₀-alkyl group, which is optionally alkoxylated.

3. Composition according to Claim 2, wherein the radical R is an alkoxylated alkyl group having the following chemical structure:
-(CH₂-CH₂-O)ₐ-R²
wherein
R² is a C₁₋₂₀-alkyl group, preferably a C₁₀₋₂₀-alkyl group and a = 1-10, preferably 1-5.

4. Composition according to any of the preceding claims, wherein the cycloaliphatic diisocyanate is isophorone diisocyanate, 4,4'-diisocyanatodicyclohexylmethane, 1,4-cyclohexylene diisocyanate or 1,3-cyclohexylene diisocyanate or a mixture of at least two of these compounds.

5. Composition according to any of the preceding claims, wherein the polyether polyol is a linear polyether diol.

6. Composition according to any of the preceding claims, wherein the monomer units present in the polyether polyol are derived from propylene glycol, butane-1,4-diol, pentane-1,5-diol or hexane 1,6-diol or a mixture of at least two of these compounds.

7. Composition according to any of the preceding claims, wherein the polyether polyol is a polytetrahydrofuran.

8. Composition according to any of the preceding claims, wherein the number-average molecular weight Mn of the polyether polyol is in the range of 140 g/mol to 1500 g/mol, more preferably 140 g/mol to 500 g/mol.

9. Composition according to any of the preceding claims, wherein the composition does not comprise any polyether polyol having an Mn value of more than 500 g/mol.

10. Composition according to any of the preceding claims, wherein the molar ratio of isocyanate groups of components (i) and (ii) to hydroxyl groups of component (iii) is > 1.0.

11. Polyurethane coating obtainable by curing the composition according to any of Claims 1-10.

12. Process for producing a polyurethane coating, wherein the composition according to any of Claims 1-10 is applied to a component and cured.

13. Component comprising the polyurethane coating according to Claim 11.

14. Component according to Claim 13, wherein the component is an aircraft wing, a rotor blade, a propeller wing or a turbine blade.

15. Use of the composition according to any of Claims 1-10 or the polyurethane coating according to Claim 11 for protecting components from erosion.

## Revendications

1. Composition durcissable, comprenant :
(i) un diisocyanate aliphatique de la formule (I) suivante :
OCN-(CH₂)ₓ-G-(CH₂)_{y}-NCO (I)
dans laquelle x et y ont indépendamment l'un de l'autre une valeur de 4 à 10, et G est un groupe allophanate,
ou un prépolymère du diisocyanate aliphatique de formule (I),
(ii) un diisocyanate cycloaliphatique ou un prépolymère de celui-ci,
(iii) un polyéther-polyol ayant un poids moléculaire moyen en nombre Mn inférieur ou égal à 1 500 g/mol.

2. Composition selon la revendication 1, dans laquelle le groupe allophanate présente la structure chimique suivante :
-N(COOR)-C(O)-N(H)-
dans laquelle le radical R est un groupe alkyle en C₁₋₂₀, qui est éventuellement alcoxylé.

3. Composition selon la revendication 2, dans laquelle le radical R est un groupe alkyle alcoxylé, qui présente la structure chimique suivante :
-(CH₂-CH₂-O)ₐ-R²
dans laquelle
R² est un groupe alkyle en C₁₋₂₀, de préférence un groupe alkyle en C₁₀₋₂₀, et
a = 1 à 10, de préférence 1 à 5.

4. Composition selon l'une quelconque des revendications précédentes, dans laquelle le diisocyanate cycloaliphatique est le diisocyanate d'isophorone, le 4,4'-diisocyanatodicyclohexylméthane, le diisocyanate de 1,4-cyclohexylène ou le diisocyanate de 1,3-cyclohexylène ou un mélange d'au moins deux de ces composés.

5. Composition selon l'une quelconque des revendications précédentes, dans laquelle le polyéther-polyol est un polyéther-diol linéaire.

6. Composition selon l'une quelconque des revendications précédentes, dans laquelle les unités monomères présentes dans le polyéther-polyol dérivent de propylène glycol, de 1,4-butanediol, de 1,5-pentanediol ou de 1,6-hexanediol ou d'un mélange d'au moins deux de ces composés.

7. Composition selon l'une quelconque des revendications précédentes, dans laquelle le polyéther-polyol est un polytétrahydrofurane.

8. Composition selon l'une quelconque des revendications précédentes, dans laquelle le poids moléculaire moyen en nombre Mn du polyéther-polyol se situe dans la plage allant de 140 g/mol à 1 500 g/mol, de préférence de 140 g/mol à 500 g/mol.

9. Composition selon l'une quelconque des revendications précédentes, dans laquelle la composition ne comprend pas de polyéther-polyol ayant une valeur Mn supérieure à 500 g/mol.

10. Composition selon l'une quelconque des revendications précédentes, dans laquelle le rapport molaire entre les groupes isocyanate des composants (i) et (ii) et les groupes hydroxyle du composant (iii) est > 1,0.

11. Revêtement de polyuréthane, pouvant être obtenu par durcissement de la composition selon l'une quelconque des revendications 1 à 10.

12. Procédé de fabrication d'un revêtement de polyuréthane, selon lequel la composition selon l'une quelconque des revendications 1 à 10 est appliquée sur un élément et durcie.

13. Élément, qui comprend un revêtement de polyuréthane selon la revendication 11.

14. Élément selon la revendication 13, l'élément étant une aile d'aéronef, une pale de rotor, une pale d'hélice ou une aube de turbine.

15. Utilisation de la composition selon l'une quelconque des revendications 1 à 10 ou du revêtement de polyuréthane selon la revendication 11 pour la protection contre l'érosion d'éléments.
